# EUROPEAN PATENT SPECIFICATION

(11) **EP 2 976 456 B1**
(45) Date of publication and mention of the grant of the patent: **09.01.2019**
(21) Application number: 14768338.7
(22) Date of filing: 19.03.2014
(51) Int. Cl.: F41H 1/08, F41H 5/04, C08J 5/24

(54) **HIGH STRENGTH FIBER COMPOSITE MATERIAL AND MANUFACTURING METHOD THEREOF**
HOCHFESTER FASERVERBUNDWERKSTOFF UND HERSTELLUNGSVERFAHREN DAFÜR
MATÉRIAU COMPOSITE À BASE DE FIBRES À HAUTE RÉSISTANCE ET SON PROCÉDÉ DE FABRICATION

(30) Priority: 20.03.2013 KR 20130029690; 26.12.2013 KR 20130163819; 17.03.2014 KR 20140030979
(43) Date of publication of application: 27.01.2016
(73) Proprietor: Kolon Industries, Inc., Gwacheon-si, Gyeonggi-do 13837 (KR)
(72) Inventor: SIM, Jae Hyung, Yongin-si, Gyeonggi-do 16910 (KR); RHO, Kyeong Hwan, Yongin-si, Gyeonggi-do 16910 (KR); LEE, Chang Bae, Yongin-si, Gyeonggi-do 16910 (KR); KIM, Jung Ha, Yongin-si, Gyeonggi-do 16910 (KR)
(74) Representative: Ter Meer Steinmeister & Partner
(86) International application number: PCT/KR2014/002302
(87) International publication number: WO 2014/148809

(56) References cited:
- WO-A2-97/21334
- JP-A- 2003 269 898
- JP-A- 2008 162 164
- JP-A- 2008 162 164
- KR-A- 20110 009 441
- KR-A- 20110 009 441
- KR-A- 20110 070 118
- US-A- 5 429 865
- US-A1- 2009 260 512
- US-A1- 2010 062 211

## Description

### Technical Field

The present invention relates to a composite material, a manufacturing method thereof and a helmet using the same, and more specifically to a high strength fiber composite material, which satisfies bulletproof performance to the level as required in the industry and has greatly improved lightweight properties, a manufacturing method thereof, and a helmet manufactured by using the same.

### Background Art

A bulletproof product is a product for protecting a human body from bullets or shells, and bulletproof performance products depend greatly on the material used.

Among such materials for bulletproofing, high-density polyethylene has a specific gravity of 0.98, which is lower than that of water, so that it is widely used as bulletproof material.

However, high-density polyethylene has characteristics that it can be greatly deformed if physical shock is applied thereto during use and has heat-sensitive characteristics. In particular, when the high-density polyethylene is employed for a helmet, an internal surface layer of the helmet may be deformed locally during bullet collision so as to enter the inside of the helmet cavity, causing deformation greater than the allowable safety clearance, so that there is a limit to obtaining excellent bulletproof performance.

In general, as other bulletproof materials, a wholly aromatic polyamide fiber, commonly referred to an aramid fiber, includes para-based aramid fiber having a structure in which benzene rings are connected linearly through an amide group (-CONH) and a meta-based aramid fiber which has a connection structure different from the para-based aramid. The para-based aramid fiber has excellent characteristics such as a high strength, high elasticity and low shrinkage. Since the para-based aramid fiber has high enough strength so as to be able to lift a two-ton vehicle with a thin cable having a thickness of about 5 mm, it is widely used for bulletproofing.

A composite material for bulletproofing is commonly manufactured by the processes of including preparing an aramid fabric using a para-based aramid fiber; immersing the prepared aramid fabric in a resin and drying the resin to manufacture a prepreg aramid fabric; and laminating the manufactured prepreg aramid fabrics in many layers and curing the laminated fabrics to complete the composite material.

However, when the prepreg aramid fabric is manufactured by using such an immersing process, there are problems that it is not possible to obtain prepreg aramid fabric of uniform weight because the quantity of impregnated resin differs depending on a concentration of resin solution and a squeezing pressure, and it is difficult to obtain prepreg aramid fabric with excellent lightweight properties because the resins are impregnated on both sides of the aramid fabric.

Further, a phenolic resin which is commonly used to manufacture the prepreg aramid fabric does not provide excellent bulletproof performance because formability during manufacturing is deteriorated due to the rigid characteristics thereof and the resins cannot adhere strongly to the aramid fabric.

Meanwhile, Korean Patent Laid-Open Publication No. 10-2011-0009441 discloses an aramid composite material formed with a resin coated layer including a phenolic resin and polyvinyl butyral (PVB) having a molecular weight of 50,000 to 60,000 on one side of an aramid fabric, a manufacturing method thereof, and a helmet manufactured by using the same. However, the above patent cited as a related art has a problem that workability is lowered because resin grains are separated from the resin coated layer during unwinding the wound aramid composite material as the resin coated layer can be easily broken due to a low molecular weight of the polyvinyl butyral, and therefore the bulletproof performance of the helmet made of the aramid composite material is decreased.

In addition, Japanese Patent Laid-Open Publication Nos. 2009-028944 and H7-180997, and U.S. Patent No. 7,124,449 disclose a method of manufacturing bulletproof products such as a bulletproof helmet using a prepreg in which a resin composite including a phenolic resin and polyvinyl butyral is coated or impregnated on an aramid fiber, respectively.

However, the above patents cited as the related art have the problems that: the molecular weights of the polyvinyl butyral resin and phenolic resin, or a mixing ratio between the phenolic resin and the polyvinyl butyral resin is not defined to a preferred range, so when a polyvinyl butyral resin having a molecular weight less than 80,000 is used, the prepared resin film may be easily broken; when the wound aramid composite material is unwound, resin grains are separated from the resin film, so the workability is deteriorated and bulletproof performance is also lowered; when the mixing ratio of phenolic resin to the polyvinyl butyral resin is less than 20 % by weight (wt.%), curing properties are decreased, and then shape stability and bulletproof performance are lowered; when the mixing ratio of phenolic resin to the polyvinyl butyral resin exceeds 70 wt.%, heat resistance and form stability are increased but adhesive force and formability are decreased; and when a conventional phenolic resin having a molecular weight of 3,000 to 4,000 is used, formability of the resin film is lowered due to inherent characteristics of the phenolic resin.

### Disclosure of Invention

### Technical Problem

Accordingly, it is an object of the present invention to provide a high strength fiber composite material which may solve the problems caused by above-described limitations and disadvantages in the related art, a manufacturing method thereof, and a helmet manufactured by using the same.

Another object of the present invention is to provide a high strength fiber composite which satisfies bulletproof performance to the level as required in the industry and has greatly improved lightweight properties, a manufacturing method thereof, and a helmet manufactured by using the same.

Another object of the present invention is to provide a high strength fiber composite which has greatly improved adhesive force between high strength fiber material and formability, a manufacturing method thereof, and a helmet manufactured by using the same.

Other features and advantages of the present invention will be described hereinafter, and will be partially apparent from such a description. Alternatively, other features and advantages of the invention will be understood by embodiments of the present invention. The objects and other advantages of the present invention will be realized and accomplished by the configuration specified in the detailed description of the present invention and claims.

### Solution to Problem

In order to accomplish the foregoing objects, according to an aspect of the present invention, there is provided a high strength fiber composite material including: a high strength fiber material; and a resin film laminated on one surface of the high strength fiber material, wherein an amount of the resin film is 10 to 18 wt.% to a total weight of the high strength fiber material and the resin film, the resin film includes 20 to 70 wt.% of phenolic resin, 20 to 70 wt.% of polyvinyl butyral (PVB) resin, and the polyvinyl butyral (PVB) resin has a molecular weight of 80,000 to 120,000.

According to another aspect of the present invention, there is provided a method of manufacturing a high strength fiber composite material, including: preparing a high strength fiber material; laminating a resin film on one surface of the high strength fiber material to manufacture a prepreg high strength fiber material; and laminating the prepreg high strength fiber material and curing to manufacture a high strength fiber laminated material, wherein an amount of the resin film is 10 to 18 wt.% to a total weight of the high strength fiber material and the resin film, the resin film includes 20 to 70 wt.% of phenolic resin, 20 to 70 wt.% of polyvinyl butyral (PVB) resin, and the polyvinyl butyral (PVB) resin has a molecular weight of 80,000 to 120,000.

### Advantageous Effects of Invention

According to the high strength fiber composite material of the present invention, since the resin film is coated on only one side of the high strength fiber material by using the laminating process, it is possible to provide excellent lightweight properties by decreasing an amount of the resin and excellent bulletproof performance by uniformly coating the resin film on the high strength fiber material.

According to the the high strength fiber composite material of the present invention, since the property of being easily breakable is prevented by using the resin including polyvinyl butyral having a molecular weight of 80,000 to 120,000, it is possible to improve formability and processability, and provide excellent bulletproof performance obtained by improved adhesiveness.

### Best Mode for Carrying out the Invention

Hereinafter, preferred embodiments will be described to more concretely understand the present invention with reference to examples and comparative examples. However, those skilled in the art will appreciate that such embodiments are provided for illustrative purposes and do not limit subject matters to be protected as disclosed in the detailed description and appended claims. Therefore, it will be apparent to those skilled in the art that various alterations and modifications of the embodiments are possible within the scope and spirit of the present invention and duly included within the range as defined by the appended claims.

The term "prepreg high strength fiber material" used in the present disclosure refers to a high strength fiber material which is coated with a resin and is cured up to a prepreg state rather than being completely cured.

The term "high strength fiber laminated material" used in the present disclosure refers to a high strength fiber material in which the high strength fiber material are laminated in many layers and the resins impregnated thereon are in a cured state.

Hereinafter, specific embodiments of a method of manufacturing a high strength fiber composite material of the present invention will be described in detail.

The method of manufacturing the high strength fiber composite material of the present invention includes preparing a high strength fiber material; laminating a resin film on one surface of the high strength fiber material to manufacture a prepreg high strength fiber material; and laminating the prepreg high strength fiber material and curing to manufacture an high strength fiber laminated material.

The high strength fiber material is aramid fabric, ultra high molecular weight polyethylene fabric, hybrid fabric consisting aramid filament and ultra high molecular weight polyethylene filament, ultra high molecular polyethylene sheet arranged ultra high molecular weight polyethylene filament to uni-direction or aramid sheet arranged aramid filament to uni-direction.

First, the method of manufacturing aramid fabric, which is an example of the high strength fiber material, will be described in detail.

The aramid fiber used in preparation of aramid fabric is prepared by the following processes of polymerizing aromatic diamine and aromatic diacid chloride in a polymerization solvent to prepare an aromatic polyamide polymer, and then spinning a spin dope containing the aromatic polyamide polymer through a spinning spinneret and coagulating to prepare an aramid fiber.

It is preferable that the aramid fiber has a total fineness in a range of 600 to 3,000 deniers. If the total fineness of the aramid fiber is less than 500 deniers, density after weaving should increase, so that productivity may be decreased. On the other hand, if the total fineness of the aramid fiber exceeds 4,000 deniers, weaving processability may be decreased.

It is preferable that the aramid fiber has a tensile strength of 20 g/d or more. When the aramid fiber having a low tensile strength is used, it is difficult to obtain bulletproof performance to the level as required in the industry.

As the aramid fabric material which functions to support the high strength fiber composite material, different types of fabric material may be used, but aramid fabric, which provides excellent bulletproof performance and is relatively easy to prepare, can be used.

Hereinafter, the method of manufacturing an aramid fabric will be described. First, applying the aramid fiber prepared by the above-described method as a warp to prepare a warp beam, then installing the warp beam in a weaving machine, applying the aramid fiber as a weft, and weaving the aramid fibers to complete an aramid fabric. At this time, it is preferable that the aramid fabric has a plain weave or basket weave texture. Since the plain weave or basket weave texture is formed with the warp and weft making a constant curvature, it is possible to provide excellent bulletproof performance as an external force is dispersed uniformly all over the fabric when the external force is applied thereto by bullets, etc.

Further, it is preferable that the aramid fabric has a density of 150 to 520 g/m². If the density thereof is too low, the fabric may comprise enough space therein to cause the bulletproof performance to decrease, and if the density thereof is too high, production efficiency may be greatly decreased due to difficulties to prepare the fabric.

Next, a method of manufacturing an aramid composite material, which is an example of the high strength fiber composite material, will be described.

First, a method of manufacturing a prepreg aramid fabric, which is an example of the prepreg high strength fiber material, will be described. The prepreg aramid fabric is manufactured by using a laminating method. To describe it more specifically, the prepreg aramid fabric is manufactured by sequentially performing the steps of adhering a resin film to the aramid fabric prepared by the above-described method, pressing the aramid fabric with the resin film adhered thereto, and drying the pressed aramid fabric.

The step of adhering the resin film to the aramid fabric may be executed through a continuous process or a non-continuous process. In the continuous process, the aramid fabric and resin film are adhered to each other by simultaneously feeding each of the aramid fabric and resin film through separate feed rollers. In the non-continuous process, the aramid fabric and resin film are adhered to each other by a sequential arrangement of the prepared aramid fabric and resin film, which have a predetermined size.

The step of pressing the aramid fabric with the resin film adhered thereto may be continuously executed using pressure rollers, or non-continuously executed using pressure plates.

The step of drying the pressed fabric may be continuously executed using such as a chamber, or non-continuously executed using pressure plates.

If the resin film contains polyvinyl butyral resin of low melting temperature, the drying step may be executed at a low drying temperature of 20 to 60°C. If the drying temperature is below 20°C, drying cannot be performed smoothly, and if the drying temperature exceeds 60°C, the coated resin is cured, so that adhesiveness of the aramid laminating material to be described below may be decreased. A resin coated layer in a prepreg state may be formed on one side of the aramid fabric through the above drying process. The drying process may be executed using a chamber which is set so as to move the pressed aramid fabric at a velocity of 4 to 20 m/min.

Conventionally, the aramid fabric is immersed in a resin composition and then dried to manufacture the prepreg aramid fabric, in the related art.

However, since such an immersing method cannot adjust the adhesion of resin at a constant rate, it is difficult to obtain uniform weight and bulletproof performance. Further, since the resin is impregnated on both sides of the aramid fabric, it is difficult to obtain excellent lightweight properties. Therefore, when a bulletproof helmet is made of such a prepreg aramid fabric, soldiers with a heavy helmet on cannot manifest sufficient mobility, thus fighting ability may be decreased and they may be exposed to a danger due to non-uniform bulletproof performance.

In contrast, since the prepreg aramid fabric of the present invention is prepared by coating the resin on only one side of the aramid fabric by using the laminating process, it is possible to have light weight and uniform bulletproof performance.

It is preferable that an amount of the resin coated layer formed on the prepreg aramid fabric is 10 to 18 wt.% to that of the aramid fabric. If the amount of the resin coated layer is less than 10 wt.%, the aramid fabric may be easily damaged by external friction, and bulletproof performance may be decreased due to a lowering of the adhesive force during forming a product. On the other hand, if the amount of the resin coated layer exceeds 18 wt.%, the lightweight properties of the aramid composite material manufactured using the same may be decreased.

The resin film contains a resin with a melting point of 50 to 100°C. When the resin film contains the resin having such a low melting temperature, formability of the product may be improved and manufacturing costs may be reduced. In particular, a resin film mixed with phenolic resin and polyvinyl butyral resin may be used.

The phenolic resin has the advantage of excellent heat resistance and high adhesive force to the aramid fiber, but formability is decreased due to being easily broken. On the other hand, the polyvinyl butyral resin may improve formability as it provides plasticity, and adhesiveness may be improved as it plays a role of a coreactive material. The melting temperature is measured by using differential scanning calorimeter (DSC) at a scanning speed of 10/min.

The resin film contains the phenolic resin mixed within a predetermined range and the polyvinyl butyral resin having a molecular weight of 80,000 to 120,000. The polyvinyl butyral resin may be included in an amount of 20 to 70 wt.% to that of the resin film. If the amount of the polyvinyl butyral resin is less than 20 wt.%, formability may be deteriorated and adhesive force may be decreased. On the other hand, if the amount of the polyvinyl butyral resin exceeds 70 wt.%, processability and adhesive force are improved but heat resistance and bulletproof performance may be decreased.

If the molecular weight of the polyvinyl butyral resin is lower than the above-described range, the resin film becomes easily breakable. Therefore when the wound aramid composite material is unwound, resin grains are separated from the resin film to make workability deteriorate, and bulletproof performance of the helmet made of the same is decreased.

The present invention is characterized by using the phenolic resin having a molecular weight of 500 to 2,000, which is relatively lower than a conventional phenolic resin, instead of using the phenolic resin having a molecular weight of 3,000 to 4,000, in order to overcome the inherent characteristics of the phenolic resin that is decreased in formability due to being easily broken during manufacturing of the resin film.

If the molecular weight of the phenolic resin is higher than the above-described range, the resin film becomes easily breakable. Therefore, when the wound aramid composite material is unwound, resin grains are separated from the resin film to make workability deteriorate, thereby also decreasing bulletproof performance of the helmet made of the same.

Further, the phenolic resin may be included in an amount of 20 to 70 wt.% to that of the resin film. If the amount of the phenolic resin is less than 20 wt.%, rigidity may be decreased, thus form stability may be deteriorate and bulletproof performance may be decreased. On the other hand, if the amount of the phenolic resin exceeds 70 wt.%, heat resistance and form stability may be increased, but adhesive force and formability may be decreased.

Further, a resin film may include a plasticizer. It is preferable to adjust the plasticizer properly depending on the amount of the polyvinyl butyral resin. That is, if the amount of the polyvinyl butyral resin is high, the amount of plasticizer is lowered relative thereto; on the other hand, if the amount of the polyvinyl butyral resin is low, the amount of plasticizer is increased relative thereto. It is preferable that the plasticizer is mixed within a range of 0.1 to 5 wt.% to that of the resin film.

The plasticizer may be at least one of alkylene, polyalkylene glycol, benzoate, aliphatic diol, alkylene polyol, and diester.

Hereinafter, the present invention will be more clearly understood by the following examples and comparative examples. However, these examples are proposed for concretely explaining the present invention, while not limiting the scope of the present invention to be protected.

### Example 1

Para-phenylenediamine, which is aromatic diamine, and terephthaloyl dichloride, which is aromatic diacid chloride, were polymerized in an N-methyl-2-pyrrolidon polymer solvent to prepare a poly-paraphenylene terephthalamide polymer, and then the polymer was dissolved in concentrated sulfuric acid to prepare a spin dope, which is spun through the spinning spinneret to prepare wholly aromatic aramid fiber of 3,000 deniers.

Subsequently, the aramid fibers were applied as the warp and weft, respectively, and were woven in plain weave to prepare an aramid fabric having a density of 450 g/m².

Next, a resin film was applied to the prepared aramid fabric in the laminating process to manufacture a prepreg aramid fabric in which a resin coated layer is formed only on one side of the aramid fabric. At this time, the resin film was prepared by dissolving a phenolic resin of 65 wt.% having a molecular weight of 550 and a polyvinyl butyral resin of 35 wt.% having a molecular weight of 90,000 in terms of solid content in a methanol solvent and then removing methanol. The laminating process was executed such that the aramid fabric was fed by a feed roller and the resin film was fed by another feed roller respectively to adhere the resin film on one side of the aramid fabric, and the aramid fabric with the resin film adhered on one side thereof is pressed using pressure rollers, and subsequently was dried using a chamber maintained at a temperature of 40 and a moving speed of 10 m/minute. A prepreg fabric formed with a resin coated layer of 13 wt.% to that of the aramid fabric was obtained through such a laminating process.

Subsequently, seventeen prepreg aramid fabrics were laminated and then were inserted into a helmet forming mold, and were formed under a pressure of 160-bar and a temperature of 150°C for 20 minutes to manufacture a bulletproof helmet.

### Examples 2 to 5

Except that the molecular weight of the phenolic resin and the polyvinyl butyral resin, and the composition rate thereof in the resin film were altered as shown in Table 1, the same procedures as described in Example 1 were executed to manufacture a bulletproof helmet.

### Examples 6 to 9

Except that the molecular weight of the phenolic resin and the polyvinyl butyral resin, and the number of laminations of the prepreg aramid fabrics were altered as shown in Table 1, the same procedures as described in Example 1 were executed to manufacture a bulletproof helmet.

### Examples 10 to 12

Except that the molecular weight of the phenolic resin and the polyvinyl butyral resin, and the amount of resin in the resin coated layer were altered as shown in Table 1, the same procedures as described in Example 1 were executed to manufacture a bulletproof helmet.

### Comparative Examples 1 to 3

Except that the molecular weight of the phenolic resin and the polyvinyl butyral resin were altered as shown in Table 1, the same procedures as described in Example 1 were executed to manufacture a bulletproof helmet.

### Comparative Example 4

Except that the molecular weight of the phenolic resin was altered as shown in Table 1 and a resin film containing 100% phenolic resin was used compared to Comparative Example 1, the same procedures as described in Comparative Example 1 were executed to manufacture a bulletproof helmet.

The respective standard deviations and average velocities of aramid composite materials manufactured in Examples and Comparative Examples were measured by the following method and results thereof are shown in Table 1 below.

### Measuring Standard Deviation

The standard deviation (σ) indirectly showing the uniformity level in an amount of the resin impregnated in the aramid fabric was measured from the weights per square meter obtained respectively after collecting ten specimens of aramid composite materials.

### Measuring Average Velocity (V50)

The average velocity (m/s) indirectly showing the bulletproof performance level of the aramid composite material was measured from a value obtained by averaging a velocity at which a bullet is completely penetrated and a velocity at which the bullet is partially penetrated using a fragment simulating projectile (FSP) in accordance with MIL-STD-662F regulation.

### Table 1

**[Table 1]**

| Section | Composition rate of resin film (wt.%) | | | Amount of resin (wt.%) | Number of laminations of prepregaramid fabrics (sheets) | Standard deviation | Average velocity(m/s) |
|---|---|---|---|---|---|---|---|
| | Phenolic resin (molecular weight) | PVB (molecular weight) | Plasticizer | | | | |
| Example 1 | 65(550) | 35(90,000) | 0 | 13 | 17 | 3.0 | 641 |
| Example 2 | 75(600) | 25(80,000) | 0 | 13 | 17 | 2.9 | 632 |
| Example 3 | 50(650) | 50(100,000) | 0 | 13 | 17 | 2.7 | 646 |
| Example 4 | 35(700) | 65(110,000) | 0 | 13 | 17 | 3.1 | 632 |
| Example 5 | 50(900) | 49(120,000) | 1 | 13 | 17 | 2.9 | 646 |
| Example 6 | 65(1,200) | 35(90,000) | 0 | 13 | 15 | 3.2 | 617 |
| Example 7 | 65(1,400) | 35(80,000) | 0 | 13 | 16 | 3.2 | 632 |
| Example 8 | 65(1,600) | 35(100,000) | 0 | 13 | 18 | 3.1 | 646 |
| Example 9 | 65(1,800) | 35(110,000) | 0 | 13 | 20 | 3.3 | 657 |
| Example 10 | 65(1,900) | 35(120,000) | 0 | 11 | 17 | 3.4 | 618 |
| Example 11 | 65(2,000) | 35(85,000) | 0 | 15 | 17 | 3.2 | 652 |
| Example 12 | 65(510) | 35(95,000) | 0 | 17 | 17 | 3.1 | 657 |
| Comparative Example 1 | 65(3,000) | 35(70,000) | 0 | 13 | 17 | 13.7 | 577 |
| Comparative Example 2 | 65(3,200) | 35(130,000) | 0 | 13 | 17 | 13.5 | 598 |
| Comparative Example 3 | 65(3,600) | 35(55,000) | 0 | 13 | 17 | 13.2 | 592 |
| Comparative Example 4 | 100(4,000) | 0 | 0 | 13 | 117 | 12.3 | 563 |

From results of measuring the standard deviation and average velocity of the bulletproof helmet manufactured in Examples 1 to 12 and Comparative Examples 1 to 3 shown in Table 1, it can be seen that the helmet, which includes the phenolic resin having a molecular weight of 500 to 2,000 and the polyvinyl butyral resin having a molecular weight of 80,000 to 120,000, provides excellent bulletproof performance.

From results of measuring the standard deviation and average velocity of the bulletproof helmet manufactured in Examples 2 to 5, it can be seen that the helmet, which includes the phenolic resin and polyvinyl butyral resin in an optimal amount of 1:1, provides the best bulletproof performance.

From results of measuring the standard deviation and average velocity of the bulletproof helmet manufactured in Examples 6 to 9, it can be seen that the bulletproof performance of the helmet is gradually increased in proportion to an increase of the number of laminations

From results of measuring the standard deviation and average velocity of the bulletproof helmet manufactured in Examples 10 to 12, it can be seen that the bulletproof performance of the helmet is gradually increased in proportion to an increase of the amount of resin coated layer.

### Industrial Applicability

The high strength fiber composite material of the present invention is useful as material of bulletproof product, for example bulletproof helmet or bulletproof clothes.

## Claims

1. A high strength fiber composite material comprising:
a high strength fiber material; and
a resin film laminated on one surface of the high strength fiber material,
wherein an amount of the resin film is 10 to 18 wt.% to a total weight of the high strength fiber material and the resin film,
the resin film comprises 20 to 70 wt.% of phenolic resin, 20 to 70 wt.% of polyvinyl butyral (PVB) resin, **characterised in that** the polyvinyl butyral (PVB) resin has a molecular weight of 80,000 to 120,000.

2. The high strength fiber composite material according to claim 1, wherein the high strength fiber material is aramid fabric, ultra high molecular weight polyethylene fabric, hybrid fabric consisting aramid filament and ultra high molecular weight polyethylene filament, ultra high molecular polyethylene sheet arranged ultra high molecular weight polyethylene filament to uni-direction or aramid sheet arranged aramid filament to uni-direction.

3. The high strength fiber composite material according to claim 1, wherein the phenolic resin has a molecular weight of 500 to 2,000.

4. The high strength fiber composite material according to claim 1, wherein the resin film further comprises a plasticizer, which is at least one of alkylene, polyalkylene glycol, benzoate, aliphatic diol, alkylene polyol, and diester.

5. A method of manufacturing a high strength fiber composite material, comprising:
preparing a high strength fiber material;
laminating a resin film on one surface of the high strength fiber material to manufacture a prepreg high strength fiber material; and
laminating the prepreg high strength fiber material and curing to manufacture a high strength fiber laminated material,
wherein an amount of the resin film is 10 to 18 wt.% to a total weight of the high strength fiber material and the resin film,
the resin film comprises 20 to 70 wt.% of phenolic resin, 20 to 70 wt.% of polyvinyl butyral (PVB) resin, **characterised in that** the polyvinyl butyral (PVB) resin has a molecular weight of 80,000to 120,000.

6. The method according to claim 5, wherein the phenolic resin has a molecular weight of 500 to 2,000.

7. The method according to claim 5, wherein the preparing step of prepreg high strength fiber material comprises:
adhering the resin film to the high strength fiber material;
pressing the high strength fiber material adhered to the resin film; and
drying the pressed high strength fiber material.

8. The method according to claim 7, wherein the drying step is executed in a state in which a temperature is maintained at 20 to 60°C.

9. The method according to claim 7, wherein the drying step is executed by using a chamber which is set so as to move the pressed high strength fiber material at a velocity of 4 to 20 m/minute.

10. The method according to claim 5, wherein the high strength fiber material is aramid fabric, ultra high molecular weight polyethylene fabric, hybrid fabric consisting aramid filament and ultra high molecular weight polyethylene filament, ultra high molecular polyethylene sheet arranged ultra high molecular weight polyethylene filament to uni-direction or aramid sheet arranged aramid filament to uni-direction.

## Patentansprüche

1. Hochfestes Faserverbundmaterial, umfassend:
ein hochfestes Fasermaterial; und
einen Harzfilm laminiert auf einer Oberfläche des hochfesten Fasermaterials,
wobei eine Menge des Harzfilms 10-18 Gewichts%, bezogen auf Gesamtgewicht des hochfesten Fasermaterials und des Harzfilms, beträgt,
wobei der Harzfilm 20-70 Gewichts% Phenolharz, 20-70 Gewichts% Polyvinylbutyral (PVB)-harz umfasst, **dadurch gekennzeichnet, dass**
das Polyvinylbutyral (PVB)-harz ein Molekulargewicht von 80.000 bis 120.000 besitzt.

2. Hochfestes Faserverbundmaterial nach Anspruch 1, wobei das hochfeste Fasermaterial Aramidgewebe, ultrahochmolekulargewichtiges Polyethylengewebe, Hybridgewebe bestehend aus Aramidfilament und ultrahochmolekulargewichtigem Polyethylenfilament, ultrahochmolekulargewichtige Polyethylenfolie angeordnet zu ultrahochmolekulargewichtigem Polyethylenfilament in Einheitsrichtung oder Aramidfolie angeordnet zu Aramidfilament in Einheitsrichtung ist.

3. Hochfestes Faserverbundmaterial nach Anspruch 1, wobei das Phenolharz ein Molekulargewicht von 500 bis 2.000 besitzt.

4. Hochfestes Faserverbundmaterial nach Anspruch 1, wobei der Harzfilm weiterhin einen Weichmacher umfasst, der mindestens eines aus Alkylen, Polyalkylenglykol, Benzoat, aliphatisches Diol, Alkylenpolyol und Diester ist.

5. Verfahren zur Herstellung eines hochfesten Faserverbundmaterials, umfassend:
Herstellen eines hochfesten Fasermaterials;
Laminieren eines Harzfilms auf eine Oberfläche des hochfesten Fasermaterials, um ein hochfestes Fasermaterial-Prepreg herzustellen; und
Laminieren des hochfesten Fasermaterial-Prepregs und Härten, um ein hochfestes Faserlaminatmaterial herzustellen,
wobei eine Menge des Harzfilms 10 bis 18 Gewichts%, bezogen auf Gesamtgewicht des hochfesten Fasermaterials und des Harzfilms, beträgt,
wobei der Harzfilm 20 bis 70 Gewichts% Phenolharz, 20 bis 70 Gewichts% Polyvinylbutryal (PVB)-harz umfasst, **dadurch gekennzeichnet, dass**
das Polyvinylbutyral (PVB)-harz ein Molekulargewicht von 80.000 bis 120.000 besitzt.

6. Verfahren nach Anspruch 5, wobei das Phenolharz ein Molekulargewicht von 500 bis 2.000 besitzt.

7. Verfahren nach Anspruch 5, wobei der Herstellungsschritt des hochfesten Fasermaterial-Prepregs umfasst:
Anhaften des Harzfilms an das hochfeste Fasermaterial;
Pressen des an den Harzfilm angehefteten hochfesten Fasermaterials; und
Trocknen des gepressten hochfesten Fasermaterials.

8. Verfahren nach Anspruch 7, wobei der Trocknungsschritt durchgeführt wird in einem Zustand, bei welchem eine Temperatur bei 20 bis 60 °C gehalten wird.

9. Verfahren nach Anspruch 7, wobei der Trockenschritt durchgeführt wird durch Verwendung einer Kammer, welche so eingestellt ist, um das gepresste hochfeste Fasermaterial mit einer Geschwindigkeit von 4 bis 20 m/Minute zu bewegen.

10. Verfahren nach Anspruch 5, wobei das hochfeste Fasermaterial Aramidgewebe, ultrahochmolekulargewichtiges Polyethylengewebe, Hybridgewebe bestehend aus Aramidfilament und ultrahochmolekulargewichtigem Polyethylenfilament, ultrahochmolekulargewichtige Polyethylenfolie angeordnet zu ultrahochmolekulargewichtigem Polyethylenfilament in Einheitsrichtung oder Aramidfolie angeordnet zu Aramidfilament in Einheitsrichtung ist.

## Revendications

1. Un matériau composite à fibres à haute résistance comprenant:
un matériau à fibres à haute résistance; et
un film de résine stratifié sur une surface du matériau à fibres à haute résistance
dans lequel une quantité du film de résine est de 10 à 18% en poids pour un poids total du matériau à fibres à haute résistance et du film de résine,
le film de résine comprend de 20 à 70% en poids de résine phénolique, de 20 à 70% en poids de résine de polyvinylbutyral (PVB), **caractérisé en ce que** la résine de polyvinylbutyral (PVB) a un poids moléculaire de 80.000 à 120.000.

2. Le matériau composite à fibres à haute résistance selon la revendication 1, dans lequel le matériau à fibres à haute résistance est un tissu d'aramide, un tissu de polyéthylène de poids moléculaire ultra élevé, un tissu hybride constitué de filament d'aramide et de filament de polyéthylène de poids moléculaire ultra élevé, un filament de polyéthylène de poids moléculaire ultra élevé disposé en feuille de polyéthylène de poids moléculaire ultra élevé à sens unique ou un filament d'aramide disposé en feuille d'aramide à sens unique.

3. Le matériau composite à fibres à haute résistance selon la revendication 1, dans lequel la résine phénolique a un poids moléculaire de 500 à 2.000.

4. Le matériau composite à fibres à haute résistance selon la revendication 1, dans lequel le film de résine comprend en outre un plastifiant, qui est au moins l'un des suivants: alkylène, polyalkylèneglycol, benzoate, diol aliphatique, polyol d'alkylène, et diester.

5. Un procédé de fabrication d'un matériau composite à fibres à haute résistance, comprenant les étapes consistant à:
préparer un matériau à fibres à haute résistance;
stratifier un film de résine sur une surface du matériau à fibres à haute résistance pour fabriquer un matériau à fibres pré-imprégné à haute résistance; et
stratifier le matériau à fibres à haute résistance pré-imprégné et durcir pour fabriquer un matériau stratifié à fibres à haute résistance,
dans lequel une quantité du film de résine est de 10 à 18% en poids pour un poids total du matériau à fibres à haute résistance et du film de résine,
le film de résine comprend de 20 à 70% en poids de résine phénolique, de 20 à 70% en poids de résine de polyvinylbutyral (PVB), caractérsié en ce que la résine de polyvinylbutyral (PVB) a un poids moléculaire de 80.000 à 120.000.

6. Le procédé selon la revendication 5, dans lequel la résine phénolique a un poids moléculaire de 500 à 2.000.

7. Le procédé selon la revendication 5, dans lequel l'étape de préparation du matériau à fibres à haute résistance pré-imprégné comprends les étapes consistant à :
adhérer le film de résine au matériau à fibres à haute résistance;
presser le matériau à fibres à haute résistance adhéré au film de résine; et
sécher le matériau à fibres à haute résistance pressé.

8. Le procédé selon la revendication 7, dans lequel l'étape de séchage est exécutée dans un état dans lequel une température est maintenue entre 20 et 60 °C.

9. Le procédé selon la revendication 7, dans lequel l'étape de séchage est exécutée en utilisant une chambre qui est réglée de manière à déplacer le matériau à fibres à haute résistance pressé à une vitesse de 4 à 20 m / minute.

10. Le procédé selon la revendication 5, dans lequel le matériau à fibres à haute résistance est un tissu d'aramide, un tissu de polyéthylène de poids moléculaire ultra élevé, un tissu hybride constitué de filament d'aramide et de filament de polyéthylène de poids moléculaire ultra élevé, un filament de polyéthylène de poids moléculaire ultra élevé disposé en feuille de polyéthylène de poids moléculaire ultra élevé à sens unique ou un filament d'aramide disposé en feuille d'aramide à sens unique.
